# EUROPEAN PATENT APPLICATION

(11) **EP 4 491 375 A1**
(43) Date of publication of application: **15.01.2025**
(21) Application number: 23798328.3
(22) Date of filing: 07.06.2023
(51) Int. Cl.: B29C 64/106, B29C 64/209, B29C 64/245, B33Y 10/00, B33Y 30/00, B33Y 70/00, B33Y 80/00

(54) **3D PRINTING METHOD FOR CONSTANT LINE WIDTH**

(30) Priority: 01.06.2023 KR 20230070850
(71) Applicant: T&R Biofab Co., Ltd., Siheung-si, Gyeonggi-do 15073 (KR)
(72) Inventor: KIM, In Ho, Seongnam-si Gyeonggi-do 13487 (KR)
(74) Representative: Caspary, Karsten
(86) International application number: PCT/KR2023/007726
(87) International publication number: WO 2024/248198

(57) **Abstract**

The present disclosure relates to a 3D printing method for constant line width, in which the ejected material has a constant line width and 3D structures may be printed clearly even when only one layer is stacked, characterized in that the method includes: ejecting a synthetic polymeric material accommodated in a syringe on a printing bed by extrusion through a nozzle and stacking it; raising the nozzle to a certain height from an ejected lower layer material to produce a thin ejected layer; and printing a material ejected through the nozzle in a manner of layering it on top of a lower layer to produce a 3D structure.

## Description

### [Technical Field]

The present disclosure relates to a three-dimensional (3D) printing method for a constant line width, and more particularly to a 3D printing method for a constant line width, in which an ejected material is stacked in a direction where it intersects with a lower layer material, resulting in a constant line width and in which a 3D structure may be clearly printed.

### [Description of the Related Art]

3D printing is a technology for molding three-dimensional structural products, and has the advantage of being able to quickly mold three-dimensional structures, as well as create shapes that may not be assembled or disassembled. This kind of 3D printing has long been researched in earnest, and in the past, it has not been widely used due to the limitations of materials that may be able to be 3D printed and the high cost of the equipment, so it has been used only in limited fields such as aerospace-related parts and prototype production such as automobiles, but recently, it has been widely used in various fields and its application areas are expanding.

3D printing technologies are broadly classified into fused deposition modeling (FDM) using solid materials, a stereo lithography apparatus (SLA) and digital lighting processing (DLP) using liquid materials, and selective laser sintering (SLS) using powder materials.

Among 3D printing technologies, FDM is a method of melting solid materials and then forming them into wires and printing them through a nozzle, and it has the advantage of being able to implement 3D printing at a lower cost than other methods and printing various colors.

In FDM in the related art, the material is molded to have a very thin layer for geometry precision and surface precision. The thickness of the ejected material is smaller than the diameter of the ejecting nozzle, and the nozzle presses down on the material to eject it.

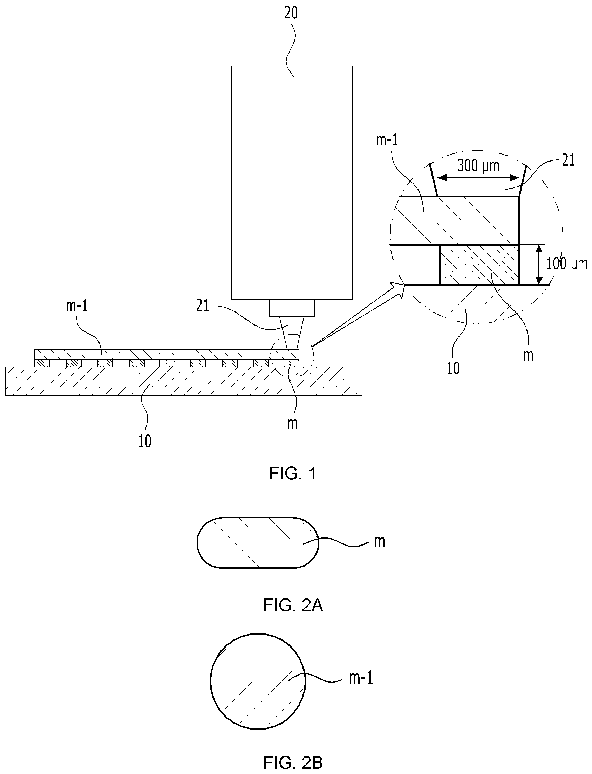

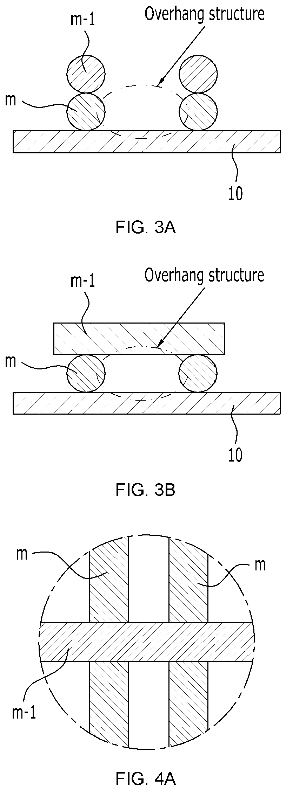

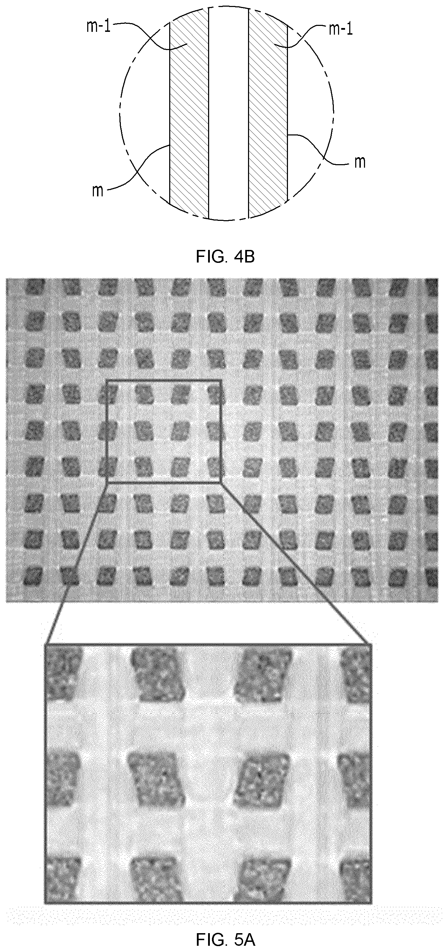

In a printing method in the related art, as shown in FIG. 1, a nozzle 21 is positioned on the upper part of the printing bed 10 by the thickness of the layer to be stacked, and then the material accommodated in the syringe 20 is ejected in an extrusion method through the nozzle 21 to press the stacked material m to print. Therefore, if the material m-1 ejected from the nozzle 21 is ejected in the same axial direction as the material m on the lower layer, as shown in FIG. 4, it will press the material m on the lower layer, and the cross-section of the material m stacked on the printing bed 10 and the cross-section of the material m-1 ejected through the nozzle 21 will be different, as shown in FIG. 2. Due to this method, it is not easy to eject without support on top of the overhang structure (a structure that requires material m-1 to be ejected into the space between the ejected materials m or into the space outside the ejected materials m) as shown in Figure 3, and when ejecting, it is difficult to eject the material in a consistent line width as the material on the lower layer sinks, and it is not easy to produce a clear 3D structure.

In addition, the printing method in the related art has the disadvantage that the overhang printing method itself is difficult because the material of the lower layer and the ejected material are printed by intersecting and printing in the same axial direction, as shown in FIGS. 3 and 4, and such stack is printing by the extrusion stacking method (FDM), and changes in the line width of the printed material occur as shown in FIGS. 5 and 6 because the materials that meet at the intersection are gathered or attracted by viscosity.

### [References in related art]

(Patent reference 0001) Korean Patent Application Publication No. 10-2022-0036205

### [Disclosure of the Invention]

### [Technical Goals]

Therefore, the present disclosure is designed to solve the above matters, and its purpose is to provide a 3D printing method for a constant line width that may improve the quality of 3D structures by printing by ejecting a material in an axial direction different from the material of the lower layer while the nozzle is floated at a certain height from the material of the lower layer ejected when stacking the material through the nozzle, so that the material is placed on the top of the other layer in an overhang structure printing method, so that the line width is kept constant, a uniform line is printed, and a pore is clearly formed.

### [Technical Solutions]

A 3D printing method for constant line width according to an example embodiment of the present disclosure to achieve the above matters may include: ejecting a synthetic polymeric material accommodated in a syringe on a printing bed by extrusion through a nozzle and stacking it; raising the nozzle to a certain height from the ejected lower layer material to produce a thin ejected layer; and printing the material ejected through the nozzle in a manner of layering it on top of a lower layer to produce a 3D structure.

In the operation of raising the nozzle to a certain height from the ejected lower layer material, the distance between the lower layer material and the ejected material may be set to be no more than twice the linear width of the ejected material.

In the operation of producing a 3D structure by printing a material ejected through said nozzle in a manner of layering it on top of a lower layer, said ejected material may be ejected in an axial direction different from the lower layer material. In the operation of producing a 3D structure by printing a material ejected through said nozzle in a manner of layering it on top of a lower layer, the produced 3D structure has a structure having a three-dimensional double void, and the void ratio may be 50% or less.

In the operation of producing a 3D structure by printing the material ejected through said nozzle in a manner of layering it on top of a lower layer, the conditions for printing the synthetic polymer material may be set such that the ejection pressure is 700kPa or less, the material heating temperature is 300°C or less, and the feeding speed of the nozzle is 2,000mm/min or less.

In the operation of producing a 3D structure by printing the material ejected through the nozzle in a manner of layering it on top of a lower layer, the feeding speed of the nozzle may be set to a speed of 100% or less of the feeding speed before the axis conversion when moving a short distance after the movement axis conversion.

### [Effects]

As described above, according to the 3D printing method for constant line width according to the present disclosure, by printing in a manner in which the nozzle is raised to a certain height from the material of the lower layer to be ejected, and then the ejected material is ejected in an axial direction different from the material of the lower layer and laid on top of the material of the lower layer to place it on the top of the other layer, the line width of the ejected material is constant and each line is printed uniformly, so that a precise 3D structure may be obtained.

### [Brief Description of the Drawings]

FIG. 1 is an illustrative diagram of a printing method in the related art.
FIG. 2 is a cross-sectional view of material deposited and material ejected through a nozzle during printing in a printing method in the related art.
FIG. 3 is a cutaway view illustrating a state of a printing process in the related art.
FIG. 4 is a plan view illustrating a printing process in the related art.

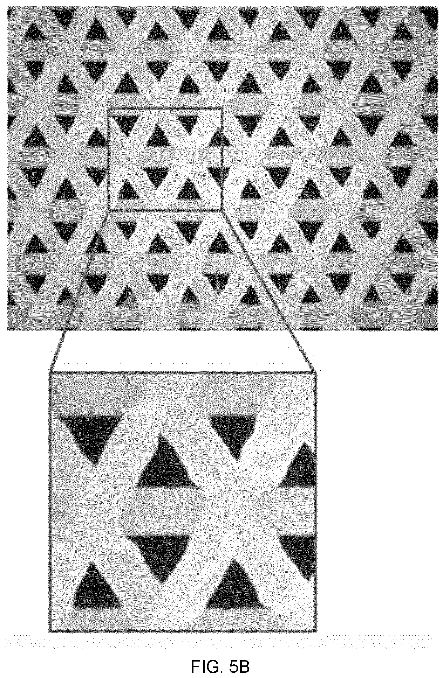

FIG. 5 is a close-up image of the surface of a planar structure produced by a printing method in the related art.

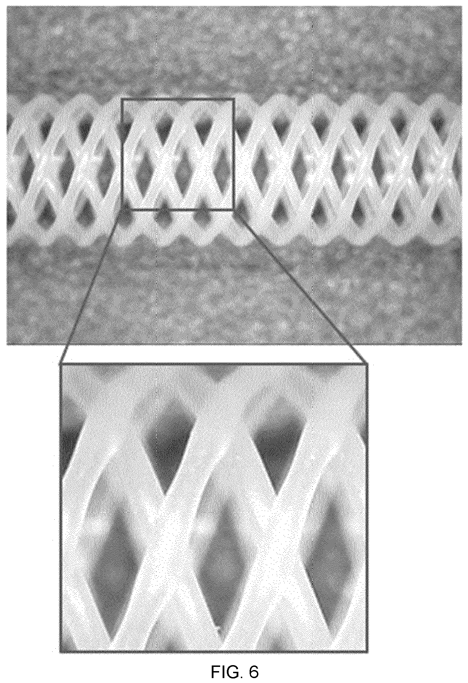

FIG. 6 is a close-up image of the surface of a cylindrical structure produced by a printing method in the art.

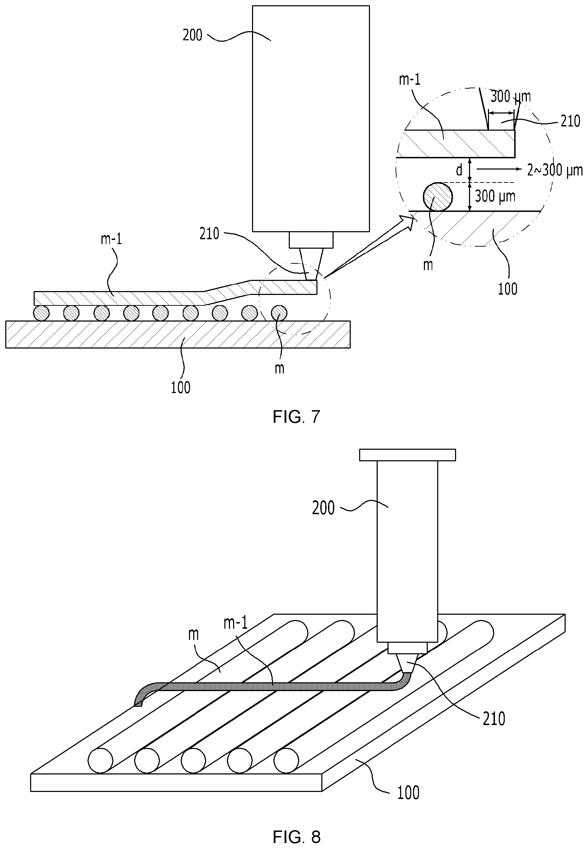

FIG. 7 is an illustrative diagram of a 3D printing process for constant line width according to the present disclosure.
FIG. 8 is a perspective view illustrating a process using a 3D printing method for constant line width according to the present disclosure.

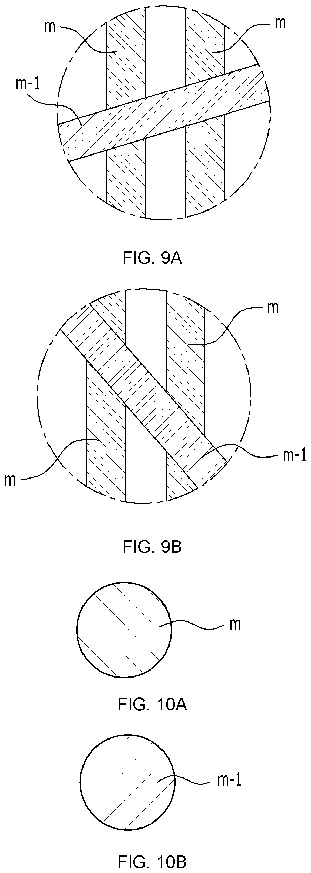

FIG. 9 is a plan view illustrating a process state through a 3D printing method for constant line width according to the present disclosure.
FIG. 10 is a cross-sectional view of the stacked material and the material ejected through the nozzle during printing with the 3D printing method for constant line width according to the present disclosure.

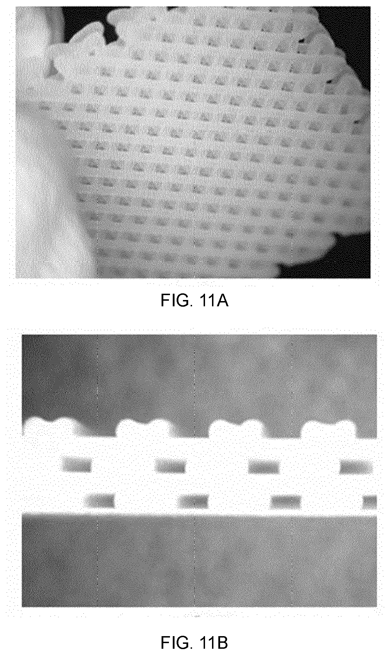

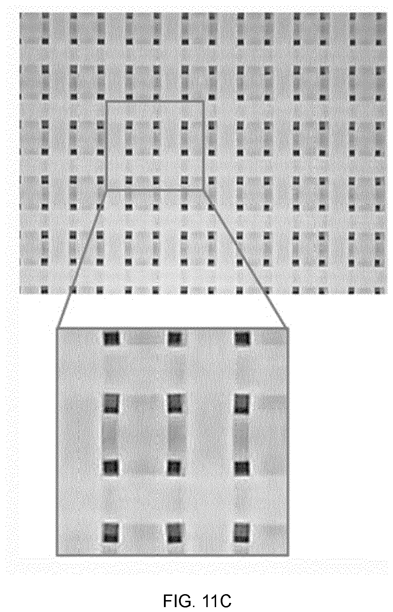

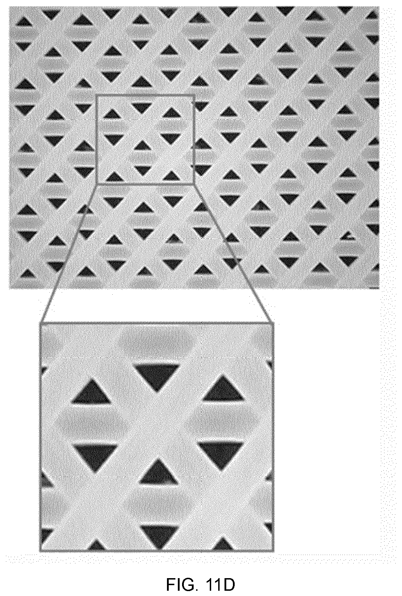

FIG. 11 is an enlarged image of the surface of a planar structure produced by a 3D printing method for constant line width according to the present disclosure.

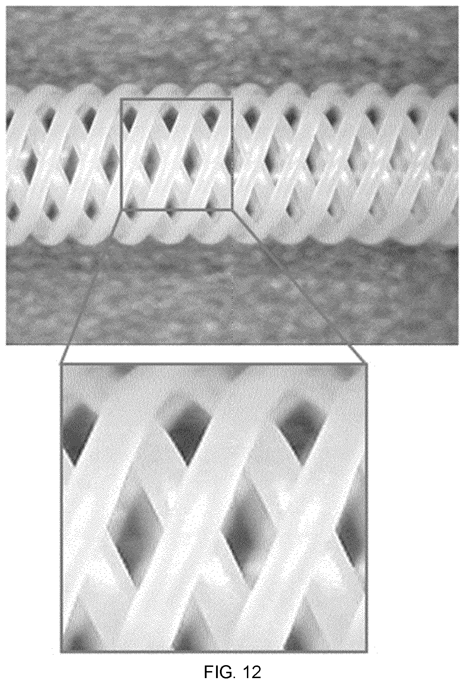

FIG. 12 is an enlarged image of the surface of a cylindrical structure produced by the 3D printing method for constant line width according to the present disclosure.

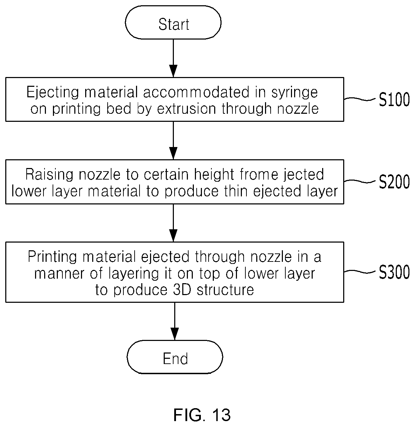

FIG. 13 is a flowchart illustrating a 3D printing method for constant line width according to the present disclosure.

### [Detailed Description for Carrying Out the Invention]

The present disclosure is subject to various modifications and may have many example embodiments, certain of which are illustrated in the drawings and further described in the detailed description. However, this is not intended to limit the disclosure to any particular example embodiment and should be understood to include all modifications, equivalents, or substitutions that are within the spirit and scope of the disclosure.

In the drawings, example embodiments of the disclosure are not limited to the particular forms shown and are exaggerated for clarity. Certain terms are used herein for the purpose of describing the disclosure and are not intended to limit the meaning or to limit the scope of the claims of the disclosure.

As used herein, the phrase "and/or" is used to mean including at least one of the components listed before or after. In addition, the expression "connected to/combined with" is used to include being directly connected to another component or being indirectly connected through another component. In this specification, the singular includes the plural unless the context otherwise mentions. In addition, components, steps, operations, and elements referred to as "including" or "comprising" as used in the specification imply the presence or addition of one or more other components, steps, operations, and elements.

In the description of the example embodiments, references to each layer, region, pattern, or structure being formed "on" or "under" the substrate, respective sides, regions, pads, or patterns include both being formed directly or by interposing other layers. The reference to "on"/"over" or "under"/"below" each layer is described with reference to the drawings.

Hereinafter, example embodiments of the present disclosure will be described in detail with reference to the accompanying drawings.

FIG. 7 is an illustrative diagram of a 3D printing process for constant line width according to the present disclosure; FIG. 8 is a perspective view illustrating a process using a 3D printing method for constant line width according to the present disclosure; FIG. 9 is a plan view illustrating a process state through a 3D printing method for constant line width according to the present disclosure; FIG. 10 is a cross-sectional view of the stacked material and the material ejected through the nozzle during printing with the 3D printing method for constant line width according to the present disclosure; FIG. 11 is an enlarged image of the surface of a planar structure produced by a 3D printing method for constant line width according to the present disclosure; FIG. 12 is an enlarged image of the surface of a cylindrical structure produced by the 3D printing method for constant line width according to the present disclosure; and FIG. 13 is a flowchart illustrating a 3D printing method for constant line width according to the present disclosure.

The 3D printing method for constant line width according to the present disclosure uses a synthetic polymer as the printing material, and the material accommodated in the syringe 200 may be stacked into a 3D structure by overhang printing while ejecting through the nozzle 210.

As shown in FIGS. 7 to 13, a 3D printing method for constant line width according to the present disclosure may include: ejecting and stacking material accommodated in a syringe 200 through a nozzle 210 by extrusion on a printing bed 100 on which a 3D structure is printed (S100); raising the nozzle 210 to a certain height from the ejected lower layer material m to produce a thin ejected layer to be stacked (S200); and printing the material m-1 ejected through the nozzle 210 in a manner of layering on the lower layer material m to produce the 3D structure (S300).

In this case, the material to be accommodated in the syringe and printed 200 may be a synthetic polymer. Preferably, the synthetic polymer is a thermoplastic polymer.

Said synthetic polymers preferably is preferably at least one selected from the group consisting of caprolactone, dioxanone, glycolide, lactide, propylene, ethylene, trimethylene, vinylchloride, butadiene, methlymethacrylate, carbonate, acrylic acid, 2-hydroxyehlymethacrylate, and polyethylene terephthalate. Furthermore, the synthetic polymer is preferably at least one selected from the group consisting of a granule type, a powder type, and a filament type.

In the raising the nozzle 210 to a certain height from the ejected lower layer material m (S200), the height of the lower layer material m and the nozzle 210 may be set to a height equal to or less than the diameter of the nozzle 210. The distance d between the lower layer material m and the ejected material m-1 may be set to be less than or equal to twice the linear width of the ejected material m-1.

Compared to the diameter of the nozzle 210 ejecting the material, the diameter of the material (m, m-1) stacked on the printing bed 100 is formed to be equal to or smaller, and by ejecting the material m-1 while the nozzle 210 is floating at a certain height from the material m on the lower layer, the distance d between the material m on the lower layer and the material m-1 ejected from the nozzle 210 may be formed to be equal to or smaller than the diameter of the nozzle 210. That is, in one example, if the diameter of the nozzle 210 is 300 *µ*m, as shown in FIG. 7, the diameter of the stacked material m on the lower layer is 300 *µ*m, and the distance d between the material m on the lower layer and the material m-1 ejected through the nozzle 210 may be 2 to 300 *µ*m.

As shown in FIGS. 8 and 9, in producing the 3D structure by printing the material m-1 ejected through the nozzle 210 in a manner of layering on the lower layer (S300), the material m-1 ejected on top of the lower layer may be ejected in an axial direction different from the material m of the lower layer. As a result, the ejected material m-1 is ejected in an axial direction different from the material m of the lower layer and is placed on top of the other layer, thereby forming a constant line width.

Meanwhile, the axial direction of the lower layer material m and the ejected material m-1 is preferably any direction except 0° or 180°, but is not limited thereto.

In other words, as shown in FIGS. 11 and 12, when applying the overhang printing method to the ejected material m-1 over the material m on the lower layer, even when applied to the rod, which may be able to produce a flat structure as well as a cylindrical structure, it may be seen that the line width is constant in all parts regardless of the overhang structure.

In the producing a 3D structure by printing the material m-1 ejected through the nozzle 210 in a manner of layering on the lower layer material m (S300), the produced 3D structure has a structure having a three-dimensional double void, and the void ratio may be 50% or less. In this case, the void ratio (%) of the 3D structure may be calculated by V-(M/p)/V×100 (V is the total volume of the 3D structure, M is the mass, and p is the density).

Thus, as shown in FIG. 11A and FIG. 11B, it may be seen that the 3D structure produced by the material extrusion method has a three-dimensional solid shape, and as shown in FIG. 11C and FIG. 11D, it may be seen that a very consistent line width may be formed by stacking only one layer, and that the shape has lines and voids in a lattice pattern.

Furthermore, the printing conditions for producing the 3D structure are preferably set such that the ejection pressure of the material m, m-1 ejected from the nozzle 210 is 700kPa or less, the heating temperature of the material m, m-1 is 300°C or less, and the feeding speed of the nozzle 210 is 2,000mm/min or less. In setting the feeding speed of the nozzle 210, it may be set at a speed of 100% or less of the feeding speed before the axis conversion when moving a short distance after the movement axis conversion.

The process of ejecting materials m-1, ... m-n while holding the nozzle 210 at a certain height from the ejected material m of the lower layer is repeated to produce a 3D structure.

As described above, a 3D structure is printed by stacking a material m, m-1 composed of a synthetic polymer on the printing bed 100. At this time, the nozzle 210 is raised to a certain height from the lower layer material m ejected on the printing bed 100, and printing is carried out by placing the material m-1 ejected through the nozzle 210 at a position higher than the thickness of the lower layer material m ejected.

Furthermore, by stacking the material m-1 ejected from the top of the lower layer material m by ejecting it in an axial direction different from that of the lower layer material m, it may be laid on the top of the other layer, so that the line width in all parts is formed uniformly.

Therefore, by printing by floating the nozzle 210 from the lower layer and placing the ejected material m-1 on top of the lower layer material m in a crossed direction, a constant line width may be printed even if only one layer is stacked on top of the lower layer material m. And, by printing by placing the material m-1 on top of the lower layer material m with the nozzle 210 floating at a certain height from the lower layer material m, the cross-section of the stacked material m and the material m-1 ejected through the nozzle 210 is formed the same, so that a uniform line is printed and has a clear 3D structure, and clear pores may be formed.

In the above detailed description of the disclosure, only particular example embodiments thereof have been described. However, the disclosure should not be understood to be limited to the special forms mentioned in the detailed description, but rather to include all variations, equivalents and substitutes within the spirit and scope of the disclosure as defined by the appended claims.

In other words, the disclosure is not limited to the specific example embodiments and descriptions set forth above, and various modifications may be made by one having ordinary skill in the art to which the disclosure belongs without departing from the spirit of the disclosure as claimed, and such modifications will fall within the scope of protection of the disclosure.

### [Explanation of symbols].

100: Printing Bed
200: Syringe
210: Nozzle

## Claims

1. A three-dimensional (3D) printing method for a constant line width, the method comprising:
ejecting a synthetic polymeric material accommodated in a syringe on a printing bed by extrusion through a nozzle and stacking it;
raising the nozzle to a certain height from an ejected lower layer material to produce a thin ejected layer; and
printing a material ejected through the nozzle in a manner of layering it on top of a lower layer to produce a 3D structure.

2. The 3D printing method for constant line width of claim 1,
wherein the raising the nozzle to a certain height from the ejected lower layer material is **characterized in that**,
a distance between the lower layer material and the ejected material is set to be no more than twice the linear width of the ejected material.

3. The 3D printing method for constant line width of claim 1,
wherein the printing a material ejected through the nozzle in a manner of layering it on top of a lower layer to produce a 3D structure is **characterized in that**,
the ejected material is ejected in an axial direction different from the lower layer material.

4. The 3D printing method for constant line width of claim 1,
wherein the printing a material ejected through the nozzle in a manner of layering it on top of a lower layer to produce a 3D structure is **characterized in that**,
the produced 3D structure has a structure having a three-dimensional double void, and a void ratio is 50% or less.

5. The 3D printing method for constant line width of claim 1,
wherein the printing a material ejected through the nozzle in a manner of layering it on top of a lower layer to produce a 3D structure is **characterized in that**,
conditions for printing a synthetic polymer material is set such that the ejection pressure is 700kPa or less, the material heating temperature is 300°C or less, and the feeding speed of the nozzle is 2,000mm/min or less.

6. The 3D printing method for constant line width of claim 1,
wherein the printing a material ejected through the nozzle in a manner of layering it on top of a lower layer to produce a 3D structure is **characterized in that**,
the feeding speed of the nozzle is set to a speed of 100% or less of the feeding speed before the axis conversion when moving a short distance after the movement axis conversion.

7. The 3D printing method for constant line width of claim 1,
wherein a diameter of the material stacked on a printing bed is formed to be equal to or smaller compared to a diameter of the nozzle ejecting the material.
